(19) Europäisches Patentamt
European Patent Office
Office européen des brevets

(11) **EP 3 502 899 B1**

(12) **FASCICULE DE BREVET EUROPEEN**

(45) Date de publication et mention
de la délivrance du brevet:
**16.09.2020 Bulletin 2020/38**

(51) Int Cl.:
***G06F 11/10*** *(2006.01)* ***H04L 9/00*** *(2006.01)*

(21) Numéro de dépôt: **18208305.5**

(22) Date de dépôt: **26.11.2018**

(54) **PROCÉDÉ DE DÉTERMINATION D'UNE SOMME D'INTÉGRITÉ, PROGRAMME D'ORDINATEUR ET ENTITÉ ÉLECTRONIQUE ASSOCIÉS**

VERFAHREN ZUR ERMITTLUNG EINER PRÜFSUMME, ZUGEORDNETES COMPUTERPROGRAMM UND ELEKTRONISCHER GEGENSTAND

METHOD FOR DETERMINING A CHECKSUM, AND RELATED COMPUTER PROGRAM AND ELECTRONIC ENTITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2017 FR 1762965**

(43) Date de publication de la demande:
**26.06.2019 Bulletin 2019/26**

(73) Titulaire: **IDEMIA France**
**92400 Courbevoie (FR)**

(72) Inventeurs:
• **BETTALE, Luk**
**92400 Courbevoie (FR)**
• **DEBANDE, Nicolas**
**92400 Courbevoie (FR)**
• **GREUET, Aurélien**
**92400 Courbevoie (FR)**

(74) Mandataire: **Jacobacci Coralis Harle**
**32, rue de l'Arcade**
**75008 Paris (FR)**

(56) Documents cités:
**US-A1- 2015 082 435 US-A1- 2017 116 437**

• **CHRISTOPHE CLAVIER ET AL: "Passive and Active Combined Attacks on AES Combining Fault Attacks and Side Channel Analysis", FAULT DIAGNOSIS AND TOLERANCE IN CRYPTOGRAPHY (FDTC), 2010 WORKSHOP ON, IEEE, PISCATAWAY, NJ, USA, 21 août 2010 (2010-08-21), pages 10-19, XP031757066, ISBN: 978-1-4244-7844-6**

**Description**

DOMAINE TECHNIQUE AUQUEL SE RAPPORTE L'INVENTION

La présente invention concerne de manière générale le domaine de la cryptographie.
Elle concerne plus particulièrement un procédé de détermination d'une somme d'intégrité, ainsi qu'un programme d'ordinateur et une entité électronique associés.

ARRIERE-PLAN TECHNOLOGIQUE

Des entités électroniques sécurisées doivent permettre d'assurer la confidentialité des données qu'elles mémorisent. De telles entités sont par exemple conçues pour protéger la confidentialité de certaines clés cryptographiques (en particulier les clés secrètes), utilisées notamment dans des applications de déchiffrement de message électronique, de signature électronique ou d'identification.
Ces entités électroniques sécurisées sont conçues pour rendre quasi impossible toute intrusion dans leur fonctionnement mais il est préférable de vérifier que les données mémorisées sont intègres, c'est-à-dire non altérées, tout en conservant leur confidentialité.
On peut classiquement procéder de deux manières lorsque l'on souhaite vérifier l'intégrité de données mémorisées sous forme chiffrée.
La première solution utilise une somme d'intégrité associée aux données brutes (avant chiffrement). Avant mémorisation, ces données sont chiffrées. La vérification de l'intégrité des données mémorisées (chiffrées) consiste alors à déchiffrer les données chiffrées puis à en calculer la somme d'intégrité associée. Cette dernière somme d'intégrité est comparée à la somme d'intégrité associée aux données brutes. Cependant, cette solution implique la manipulation de données en clair (après déchiffrement). La confidentialité des données mémorisées n'est plus forcément assurée.
La deuxième solution propose de mémoriser dans l'entité électronique une somme d'intégrité associée aux données chiffrées. Un test de vérification de l'intégrité des données mémorisées (chiffrées) consiste alors à déterminer de manière indépendante une autre somme d'intégrité associée aux données chiffrées puis à comparer cette somme avec celle mémorisée dans l'entité électronique. Cette méthode présente l'avantage d'être exécutée sur les données chiffrées ; les données mémorisées ne sont donc pas manipulées en clair. Cependant, comme les données chiffrées sont quant à elles connues, un attaquant pourrait remplacer ces données chiffrées par un autre jeu de données correspondant à la même somme d'intégrité. La vérification d'intégrité serait alors validée de manière trompeuse. Un attaquant aurait également la possibilité de remplacer la somme d'intégrité avec une valeur appropriée car il pourrait la calculer à partir d'un jeu de données se substituant aux données chiffrées.
De plus, par construction, la détermination d'une somme d'intégrité dépend des données chiffrées, qui dépendent elles-mêmes de la clé de chiffrement utilisée. Ainsi lorsque les données mémorisées sur deux entités différentes sont chiffrées à partir de deux clés différentes, la deuxième solution n'est pas adaptée (puisqu'il serait alors nécessaire de manipuler et comparer deux valeurs différentes de somme d'intégrité et donc de faire deux applications différentes de la fonction de somme de contrôle afin de pouvoir vérifier l'intégrité des données).
La demande de brevet des États-Unis US 2015/082435 A1 par Roussellet et al. expose la protection d'un circuit intégré contre les attaques par canaux auxiliaires comprenant plusieurs niveaux de masquage, ainsi que l'utilisation d'une somme d'intégrité.
L'article "Passive and Active Combined Attacks on AES Combining Fault Attacks and Side Channel Analysis" par C. Clavier et al, 2010 Workshop on Fault Diagnosis and Tolerance in Cryptography (FDTC), expose l'utilisation à la fois des sommes d'intégrité et du masquage en tant que contremesures aux attaques contre le cryptosystème AES.

OBJET DE L'INVENTION

La présente invention propose d'améliorer la vérification de l'intégrité de données sensibles sans affecter la confidentialité de ces données.
Plus particulièrement, on propose selon l'invention un procédé de détermination d'une première somme d'intégrité comprenant les étapes suivantes :

- détermination d'une première donnée masquée par application d'une opération de « ou exclusif » entre une première donnée et un premier masque de données ;
- détermination d'une deuxième donnée par application à la première donnée masquée d'une première fonction cryptographique, la deuxième donnée étant masquée par un second masque de données ;
- détermination d'une deuxième somme d'intégrité associée à la deuxième donnée par application à ladite deuxième donnée d'une fonction de somme de contrôle ; et

- détermination de la première somme d'intégrité par application d'une opération de « ou exclusif » entre la deuxième somme d'intégrité et une troisième somme d'intégrité associée au second masque de données.

Ainsi, selon ce procédé, pour vérifier l'intégrité des données d'entrée, les données chiffrées sont tout d'abord masquées. Ce sont ensuite les données masquées qui sont déchiffrées et à partir desquelles on calcule une somme d'intégrité. L'étape de déchiffrement ne dévoile donc pas la donnée d'entrée en clair et la vérification de l'intégrité des données s'effectue donc en conservant la confidentialité des données d'entrée.

D'autres caractéristiques non limitatives et avantageuses du procédé de détermination d'une première somme d'intégrité conforme à l'invention, prises individuellement ou selon toutes les combinaisons techniquement possibles, sont les suivantes :

- la première fonction cryptographique combine par une opération de « ou exclusif » la première donnée masquée et un résultat obtenu en sortie d'un bloc de chiffrement ;
- le bloc de chiffrement utilise une clé cryptographique ;
- la première fonction cryptographique est de type déchiffrement à rétroaction ou déchiffrement à rétroaction de sortie ou déchiffrement basé sur un compteur ;
- le premier masque de données est généré de manière aléatoire ;
- il est également prévu une étape de détermination de la troisième somme d'intégrité associée au second masque de données par application de la fonction somme de contrôle au second masque de données ;
- la première fonction cryptographique est une fonction à conservation de masque de données ;
- le premier masque de données et le second masque de données sont égaux ;
- l'étape de détermination d'au moins une somme d'intégrité parmi la deuxième somme d'intégrité et la troisième somme d'intégrité est réalisée par application de la fonction somme de contrôle avec un vecteur d'initialisation mis à 0 ;
- la fonction de somme de contrôle est une application affine de donnée ;
- la fonction de somme de contrôle est de type calcul de parité ou contrôle de redondance cyclique ;
- il est également prévu des étapes de :

    - réception de la première donnée et d'une quatrième somme d'intégrité associée à une troisième donnée ; et
    - vérification d'intégrité de la troisième donnée par comparaison de la première somme d'intégrité et de la quatrième somme d'intégrité ; et

- la première donnée est obtenue par application d'une deuxième fonction cryptographique à la troisième donnée, la deuxième fonction cryptographique permettant d'effectuer une opération inverse d'au moins une opération de la première fonction cryptographique.

L'invention propose également un programme d'ordinateur comprenant des instructions exécutables par un processeur et adaptées à mettre en œuvre un procédé de détermination d'une première somme d'intégrité lorsque ces instructions sont exécutées par le processeur.

L'invention propose également une entité électronique de détermination d'une première somme d'intégrité comprenant :

- un module de détermination d'une première donnée masquée par application d'une opération de « ou exclusif » entre une première donnée et un premier masque de données ;
- un module de détermination d'une deuxième donnée par application à la première donnée masquée d'une première fonction cryptographique, la deuxième donnée étant masquée par un second masque de données ;
- un module de détermination d'une deuxième somme d'intégrité associée à la deuxième donnée par application à ladite deuxième donnée d'une fonction de somme de contrôle ;
- un module de détermination de la première somme d'intégrité par application d'une opération de « ou exclusif » entre la deuxième somme d'intégrité et une troisième somme d'intégrité associée au second masque de données.

L'entité électronique peut comporter également :

- une mémoire stockant la première donnée et une quatrième somme d'intégrité associée à une troisième donnée ; et
- un module de vérification d'intégrité de la troisième donnée par comparaison de la première somme d'intégrité et de la quatrième somme d'intégrité.

DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement les éléments principaux d'une entité électronique au sein de laquelle est mise en œuvre l'invention ;
- la figure 2 représente, sous forme de logigramme, un premier exemple de procédé conforme à l'invention ; et
- la figure 3 représente, sous forme de logigramme, un deuxième exemple de procédé conforme à l'invention.

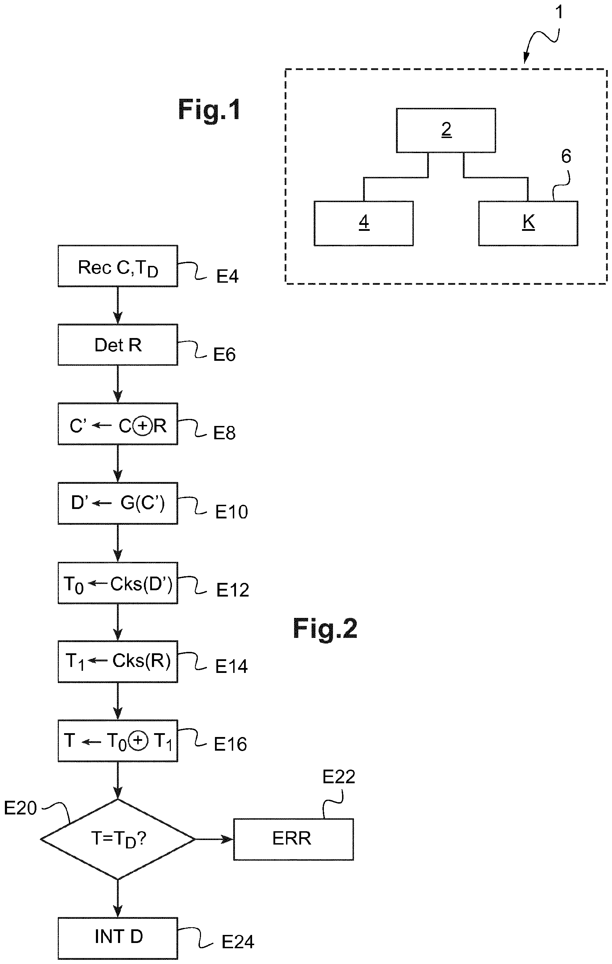

La figure 1 représente schématiquement les éléments principaux d'une entité électronique 1 au sein de laquelle est mise en œuvre l'invention. Cette entité électronique 1 est par exemple une carte à microcircuit, par exemple une carte à circuit intégré universelle (ou UICC pour *"Universal Integrated Circuit Card"*). En variante, il pourrait s'agir d'un élément sécurisé (ou SE pour *"Secure Element"*) - par exemple un microcontrôleur sécurisé, d'un dispositif électronique portatif (ou *"hand-held electronic device"* selon l'appellation anglo-saxonne couramment utilisée) - par exemple un terminal de communication ou un passeport électronique, ou d'un ordinateur.

L'entité électronique 1 comprend un processeur 2 (ici un microprocesseur), une mémoire vive 4 et une mémoire non-volatile réinscriptible 6 (par exemple de type EEPROM pour *"Electrically Erasable and Programmable Read-Only Memory"*). L'entité électronique 1 pourrait éventuellement comprendre en outre une mémoire morte. La mémoire vive 4 et la mémoire non-volatile réinscriptible 6 (ainsi que le cas échéant la mémoire morte) sont chacune liées au processeur 2 de sorte que le processeur 2 peut lire ou écrire des données dans chacune de ces mémoires.

Une de ces mémoires, par exemple la mémoire non-volatile réinscriptible 6, mémorise des instructions de programme d'ordinateur qui permettent la mise en œuvre de l'un au moins des procédés décrits ci-dessous en référence aux figures 2 à 3 lorsque ces instructions sont exécutées par le processeur 2.

Les mémoires 4, 6 stockent également des données représentatives de valeurs utilisées lors de la mise en œuvre des procédés décrits ci-dessous. Par exemple, la mémoire non-volatile réinscriptible 6 mémorise une clé cryptographique K.

La mémoire vive 4 mémorise par ailleurs, par exemple au sein de variables, des données traitées au cours des procédés décrits ci-dessous.

L'entité électronique 1 comporte également un ensemble de modules (non représentés). Ces modules peuvent en pratique être réalisés par une combinaison d'éléments matériels et d'éléments logiciels. Chaque module possède une fonctionnalité décrite dans les procédés conformes à l'invention et exposés ci-après. Ainsi, pour chaque module, l'entité électronique 1 mémorise par exemple des instructions de logiciel exécutables par le processeur 2 de l'entité électronique 1 afin d'utiliser un élément matériel (par exemple une interface de communication ou une mémoire) et de mettre ainsi en œuvre la fonctionnalité offerte par le module.

La figure 2 représente un premier exemple de procédé mis en œuvre dans l'entité électronique 1 conformément à l'invention.

Ce procédé constitue un procédé de traitement cryptographique d'une donnée d'entrée D dont on souhaite assurer l'intégrité tout en maintenant sa confidentialité.

On se place dans le cas où une donnée chiffrée C est obtenue par chiffrement de la donnée d'entrée D dont on souhaite conserver la confidentialité et l'intégrité.

Précisément, la donnée d'entrée D a été chiffrée au préalable par application d'une fonction cryptographique de chiffrement F afin d'obtenir une donnée chiffrée C.

La fonction cryptographique de chiffrement F est par exemple de type chiffrement à rétroaction (ou CFB pour « *Cipher Feedback* » selon l'appellation anglo-saxonne couramment utilisée) ou chiffrement à rétroaction de sortie (ou OFB pour « *Output Feedback* ») ou chiffrement basé sur un compteur (ou CTR pour « *CounTerR* »).

Le chiffrement est par exemple effectué dans un processeur d'une entité électronique distincte de l'entité électronique 1. Pour cela, dans les cas de chiffrement par bloc mentionnés ci-dessus, la donnée d'entrée D peut être divisée en P blocs de données $D_i$. On applique alors successivement P blocs de chiffrement et on utilise pour chaque bloc de chiffrement une variable X ayant une longueur en bits identique à celle des blocs de données $D_i$. Pour le premier bloc de chiffrement, la variable X est égale à une donnée d'initialisation. Cette donnée d'initialisation peut être un vecteur d'initialisation, un vecteur d'initialisation préalablement chiffré ou une valeur obtenue par compteur. Pour chaque bloc de chiffrement suivant, la variable X est égale à une valeur obtenue par compteur, ou au résultat obtenu en sortie du bloc de chiffrement précédent, éventuellement combiné par une opération de « ou exclusif » avec un bloc de données d'entrée.

Le chiffrement de chaque bloc de données $D_i$ repose sur l'itération i du bloc de chiffrement dont la variable X est un argument. Ce bloc de chiffrement utilise une clé cryptographique mémorisée pour l'application d'un algorithme cryptographique $f_K$ à la variable X et résulte en l'obtention de la variable $f_K(X)$.

Pour chaque bloc de données $D_i$, un bloc de données chiffrées $C_i$ est ensuite déterminé par application d'une opération de « ou exclusif » entre le bloc de données $D_i$ et la variable $f_K(X)$ résultant de l'itération i du bloc de chiffrement : $C_i = D_i \oplus f_K(X)$. On rappelle que l'opération logique de « ou exclusif » (ou XOR) correspond au symbole $\oplus$ entre les variables considérées. La donnée chiffrée C est formée de l'ensemble des P blocs de données chiffrées $C_i$. La fonction cryptographique de chiffrement F est dans ce cas la combinaison des applications successives de l'algorithme cryptographique $f_K$ et de l'opération de « ou exclusif ». La fonction cryptographique de chiffrement F est ainsi une application linéaire de données par rapport à l'opération de « ou exclusif ».

On se place également dans le cas où une somme d'intégrité $T_D$ associée à la donnée d'entrée D est obtenue par application d'une fonction somme de contrôle Cks à la donnée d'entrée D. Cette fonction somme de contrôle Cks est décrite plus en détail dans la suite de cette description.

Comme représenté sur la figure 2, le procédé débute à l'étape E4 par la réception de la donnée chiffrée C par l'entité électronique 1 (précisément par le processeur 2) et d'une somme d'intégrité $T_D$ associée à la donnée d'entrée D.

A l'étape E6, le processeur 2 génère de manière aléatoire un masque de données R.

Ce masque de données R est ensuite utilisé à l'étape E8 pour masquer la donnée chiffrée C reçue à l'étape E4. L'étape de masquage est réalisée par application d'une opération de « ou exclusif » entre la donnée chiffrée C et le masque de données R. Une donnée masquée C' est alors obtenue à l'issue de cette étape E8 : $C' = C \oplus R$.

Selon le premier exemple du procédé conforme à l'invention, une fonction cryptographique de déchiffrement G est ensuite appliquée à la donnée masquée C' à l'étape E10. Cette fonction cryptographique de déchiffrement G permet le déchiffrement de la donnée masquée C'.

La fonction cryptographique de déchiffrement G, appliqué à la donnée masquée C', permet de déchiffrer la donnée chiffrée C (par application de la fonction inverse $F^{-1}$ de la fonction cryptographique de chiffrement F) tout en conservant le masque R. Autrement dit, la fonction cryptographique de déchiffrement G vérifie : $G(C') = G(C \oplus R) = F^{-1}(C) \oplus R$.

On pourra se référer par exemple au document EP2296307 pour plus d'explications sur la manipulation des masques en lien avec une fonction cryptographique.

La fonction cryptographique de déchiffrement G permet ainsi par exemple un déchiffrement de type déchiffrement à rétroaction (CFB) ou déchiffrement à rétroaction de sortie (OFB) ou déchiffrement basé sur un compteur (CTR).

A l'étape E10, une donnée déchiffrée D' est alors obtenue par application de la fonction cryptographique de déchiffrement G à la donnée masquée C' (c'est-à-dire au résultat obtenu par application d'une opération de « ou exclusif » entre la donnée chiffrée C et le masque de données R) : $D' = G(C') = G(C \oplus R)$.

En variante, la fonction cryptographique de chiffrement F et la fonction inverse $F^{-1}$ (mise en œuvre au sein de la fonction cryptographique de déchiffrement G) peuvent être identiques.

Selon une autre variante, la fonction cryptographique de chiffrement F, la fonction inverse $F^{-1}$ et la fonction cryptographique de déchiffrement G peuvent être identiques. C'est par exemple le cas pour les fonctions de type chiffrement/déchiffrement à rétroaction de sortie (OFB) ou de type chiffrement/déchiffrement basé sur compteur (CTR).

L'utilisation du masque de données R, généré de manière aléatoire, permet de conserver la confidentialité de la donnée d'entrée D lors de cette étape de déchiffrement car le résultat de l'application de la fonction cryptographique de déchiffrement G est également un résultat aléatoire :

$D' = G(C \oplus R) = F^{-1}(C) \oplus R = D \oplus R$. Cette étape de déchiffrement ne dévoile donc pas la donnée d'entrée D en clair.

Dans la suite du procédé conforme à l'invention, à l'étape E12, on détermine une somme d'intégrité $T_0$ associée à la donnée déchiffrée (masquée) D'. Pour cela, la fonction de somme de contrôle Cks (ou « *checksum* » selon l'appellation anglo-saxonne couramment utilisée) est appliquée à la donnée déchiffrée D' : $T_0 = Cks(D') = Cks(D \oplus R)$.

La fonction somme de contrôle Cks est par exemple de type calcul de parité (ou « *parity byte* » selon l'appellation anglo-saxonne couramment utilisée) ou de type contrôle de redondance cyclique (ou CRC pour « *Cyclic Redundancy Check* » selon l'appellation anglo-saxonne couramment utilisée).

Cette fonction somme de contrôle Cks est dans les cas susmentionnés une application affine de données. La fonction somme de contrôle Cks vérifie donc des propriétés de linéarité par rapport à une opération de « ou exclusif ».

Par exemple, pour une fonction de type CRC, la propriété de linéarité s'écrit, en considérant deux variables Y et Z : $CRC(Y \oplus Z) = CRC(Y) \oplus CRC(Z)$.

La fonction somme de contrôle Cks utilise généralement en entrée un vecteur d'initialisation IV. Ce vecteur d'initialisation IV intervient en étant combiné par une opération de « ou exclusif » à la donnée utilisée en argument de la fonction somme de contrôle Cks.

Par exemple, pour une fonction de type CRC, pour laquelle le vecteur d'initialisation IV est un paramètre de la fonction somme de contrôle, la relation suivante est vérifiée : $CRC(IV, Y \oplus Z) = CRC(IV, Y) \oplus CRC(0, Z)$, avec Y et Z deux variables.

Selon cet exemple, la somme d'intégrité $T_0$ s'écrit :

$$T_0 = CRC(IV, D') = CRC(IV, D \oplus R) = CRC(IV, D) \oplus CRC(0, R).$$

En variante, le vecteur d'initialisation IV peut par exemple être mis à 0.

Parallèlement, à l'étape E14, une somme d'intégrité $T_1$ associée au masque de données R est déterminée. La somme d'intégrité $T_1$ est obtenue par application de la fonction somme de contrôle Cks au masque de données R : $T_1 = Cks(R)$.

Dans le cas de l'exemple ci-dessus, la somme d'intégrité $T_1$ s'écrit :

$$T_1 = CRC(0, R).$$

La somme d'intégrité $T_0$ associée à la donnée déchiffrée D' obtenue à l'étape E12 et la somme d'intégrité $T_1$ associée au masque de données R obtenue à l'étape E14 sont combinées, à l'étape E16, par l'application d'une opération de « ou exclusif » pour déterminer la somme d'intégrité T. La propriété de linéarité de la fonction somme de contrôle permet de montrer que la somme d'intégrité T est associée à la donnée d'entrée D :

$$T = T_0 \oplus T_1 = Cks(D') \oplus Cks(R) = Cks(D' \oplus R) = Cks(D \oplus R \oplus R) = Cks(D).$$

En considérant l'exemple présenté ci-dessus, la somme d'intégrité T s'écrit :

$$T = T_0 \oplus T_1 = CRC(IV, D') \oplus CRC(0, R) = CRC(IV, D' \oplus R) = CRC(IV, D \oplus R \oplus R) = CRC(IV, D).$$

La somme d'intégrité T et la somme d'intégrité $T_D$ sont utilisées ensuite pour vérifier l'intégrité de la donnée d'entrée D.

L'étape E20 correspond alors à une étape de vérification d'intégrité de la donnée d'entrée D. Pour cela, la somme d'intégrité T et la somme d'intégrité $T_D$ sont comparées.

Si l'égalité $T = T_D$ est vérifiée à l'étape E20, le processeur 2 peut conclure sur la conservation de l'intégrité de la donnée d'entrée D (à l'étape E24). Le processeur 2 peut par exemple ensuite mettre en place une succession d'opérations utilisant la donnée masquée D'. Cette succession d'opérations prend également en compte le masque de données R.

La succession d'opérations correspond par exemple à un algorithme cryptographique dont l'implémentation matérielle est réalisée dans une entité extérieure à l'entité électronique 1. Par exemple, elle peut être réalisée dans un cryptoprocesseur ou un coprocesseur. L'algorithme cryptographique peut par exemple être de type « standard de chiffrement avancé » (AES) ou « triple DES » (3DES) ou « SEED » ou encore de type « standard gouvernemental » (GOST).

Si l'égalité $T = T_D$ n'est pas vérifiée à l'étape E20, le processeur 2 met en œuvre une étape de traitement d'erreur (étape E22). Une telle étape de traitement d'erreur E22 comprend par exemple l'écriture d'une donnée de blocage (ou verrou) dans la mémoire non-volatile réinscriptible 6. La présence d'une donnée de blocage dans la mémoire non-volatile réinscriptible 6 empêchera tout fonctionnement ultérieur de l'entité électronique 1. Pour ce faire, le processeur 2 consulte par exemple la zone de mémorisation potentielle de la donnée de blocage lors du démarrage de son fonctionnement et arrête son fonctionnement en cas de détection de la donnée de blocage.

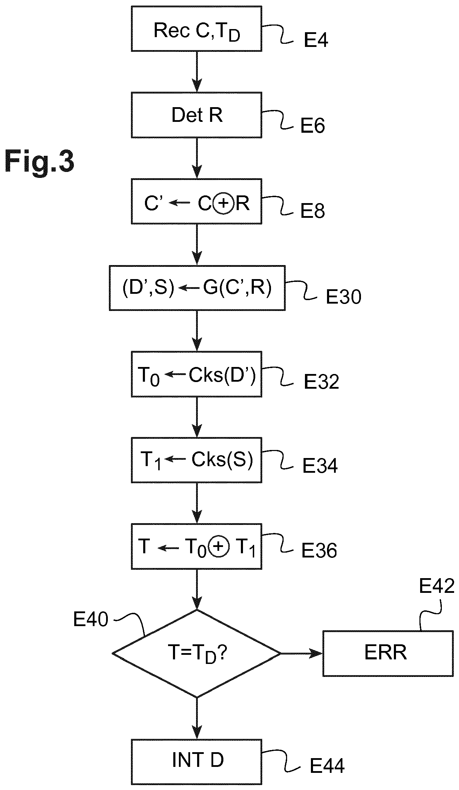

La figure 3 représente un deuxième exemple du procédé conforme à l'invention. Les étapes communes aux figures 2 et 3 portent les mêmes références et ne seront pas décrites à nouveau dans la suite.

Selon ce deuxième exemple du procédé représenté sur la figure 3, la fonction cryptographique de déchiffrement G, appliquée à la donnée masquée C' à l'étape E30, peut être une fonction qui permet de déchiffrer la donnée chiffrée C (par application de la fonction inverse $F^{-1}$ de la fonction cryptographique de chiffrement F) tout en masquant le résultat obtenu avec un autre masque de données. Autrement dit, la fonction de déchiffrement G correspond à une fonction qui permet de déterminer l'inverse tout en maintenant un masquage de la donnée manipulée (avec l'application d'un masque de données éventuellement différent).

Dans ce cas, la fonction cryptographique de déchiffrement G peut être représentée comme une fonction à plusieurs variables, dont le masque de données R est un argument d'entrée. La fonction cryptographique de déchiffrement G vérifie alors : $(D',S) = G(C',R) = G(C \oplus R,R)$, avec $D' = F^{-1}(C) \oplus S$ et S correspondant à un autre masque de données résultant de l'application de la fonction cryptographique G.

On pourra également se référer par exemple au document EP2296307 pour plus d'explications sur la manipulation des masques en lien avec une fonction cryptographique.

Comme représenté sur la figure 3, à l'étape E30, on obtient le couple de données (D', S) dans lequel la donnée déchiffrée D' est obtenue par application de la fonction cryptographique de déchiffrement G à la donnée masquée C' (c'est-à-dire au résultat obtenu par application d'une opération de « ou exclusif » entre la donnée chiffrée C et le masque de données R) : $(D',S) = G(C',R) = G(C \oplus R, R)$ avec $D' = F^{-1}(C) \oplus S$. On obtient donc en résultat de l'application de la fonction cryptographique de déchiffrement G, la donnée déchiffrée D' mais masquée par l'autre masque de données S (qui est également conservé en sortie pour la suite du procédé).

Comme décrit précédemment, l'utilisation de masques de données R, S, R étant généré de manière aléatoire, permet de conserver la confidentialité de la donnée d'entrée D lors de cette étape de déchiffrement car le résultat de l'application de la fonction cryptographique de déchiffrement G est également un résultat aléatoire :

$D' = F^{-1}(C) \oplus S = D \oplus S$. Cette étape de déchiffrement ne dévoile donc pas non plus la donnée d'entrée D en clair.

Dans la suite du procédé conforme à l'invention, comme décrit précédemment, à l'étape E32, on détermine une somme d'intégrité $T_0$ associée à la donnée déchiffrée (masquée) D'. Pour cela, la fonction de somme de contrôle Cks est appliquée à la donnée déchiffrée D' : $T_0 = Cks(D') = Cks(D \oplus S)$.

Dans le cas où la fonction somme de contrôle est de type contrôle de redondance cyclique (CRC) et prend le vecteur d'initialisation IV pour paramètre, la somme d'intégrité $T_0$ s'écrit :

$$T_0 = CRC(IV, D') = CRC(IV, D \oplus S) = CRC(IV, D) \oplus CRC(0, S).$$

Parallèlement, comme représenté sur la figure 3, à l'étape E34, la somme d'intégrité $T_1$ associée à l'autre masque de données S (obtenu en sortie de l'application de la fonction cryptographique de déchiffrement G) s'écrit : $T_1 = Cks(S)$.

Dans le cas de l'exemple mentionné ci-dessus, la somme d'intégrité $T_1$ s'écrit alors : $T_1 = CRC(0, S)$.

La somme d'intégrité $T_0$ associée à la donnée déchiffrée D' obtenue à l'étape E32 et la somme d'intégrité $T_1$ associée à l'autre masque de données S obtenue à l'étape E34 sont combinées, à l'étape E36, par l'application d'une opération de « ou exclusif » pour déterminer la somme d'intégrité T. La propriété de linéarité de la fonction somme de contrôle permet de montrer que la somme d'intégrité T est associée à la donnée d'entrée D :

$$T = T_0 \oplus T_1 = Cks(D') \oplus Cks(S) = Cks(D' \oplus S) = Cks(D \oplus S \oplus S) = Cks(D).$$

Dans le cas de l'exemple présenté, la somme d'intégrité T s'écrit :

$$T = T_0 \oplus T_1 = CRC(IV, D') \oplus CRC(0, S) = CRC(IV, D' \oplus S) = CRC(IV, D \oplus S \oplus S) = CRC(IV, D).$$

Les étapes de vérification d'intégrité E40 à E44 sont similaires aux étapes E20 à E24 décrites précédemment.

En variante de ce deuxième exemple du procédé conforme à l'invention, un premier masque de données $R_1$ et un deuxième masque de données $R_2$ peuvent être utilisés à l'étape E8 (après avoir été générés préalablement de manière aléatoire lors d'une étape de type E6). Dans ce cas, la donnée masquée C' est obtenue par application d'une opération de « ou exclusif » entre la donnée chiffrée C, le premier masque de données $R_1$ et le deuxième masque de données $R_2$ : $C' = C \oplus R_1 \oplus R_2$.

L'application de la fonction cryptographique de déchiffrement G à la donnée masquée permet d'obtenir en sortie un triplet de données (D', $S_1$, $S_2$) :

$(D', S_1, S_2) = G(C', R_1, R_2) = G(C \oplus R_1 \oplus R_2, R_1, R_2)$ dans lequel la donnée déchiffrée D' est exprimée par $D' = F^{-1}(C) \oplus S_1 \oplus S_2 = D \oplus S_1 \oplus S_2$ (comme précédemment, les autres masques de données $S_1$ et $S_2$ générés en sortie de l'application de la fonction cryptographique de déchiffrement G sont conservés pour la suite du procédé).

Dans cette variante, à l'étape E34, une somme d'intégrité $T_5$ et une somme d'intégrité $T_6$ peuvent être respectivement obtenues par application de la fonction somme de contrôle au masque de données $S_1$ et au masque de données $S_2$. La somme d'intégrité T est alors obtenue par l'application d'une opération de « ou exclusif » entre la somme d'intégrité $T_0$ associée à la donnée déchiffrée D', la somme d'intégrité $T_5$ associée au premier masque $S_1$ et la somme d'intégrité $T_6$ associée au deuxième masque $S_2$ :

$$T = T_0 \oplus T_5 \oplus T_6 = Cks(D') \oplus Cks(S_1) \oplus Cks(S_2) = Cks(D' \oplus S_1 \oplus S_2) =$$
$$Cks(D \oplus S_1 \oplus S_2 \oplus S_1 \oplus S_2) = Cks(D).$$

Dans le cas d'une fonction somme de contrôle de type contrôle de redondance cyclique (CRC) qui prend le vecteur d'initialisation IV pour paramètre, on obtient :

$$T = T_0 \oplus T_5 \oplus T_6 = CRC(IV, D') \oplus CRC(0, S_1) \oplus CRC(0, S_2) =$$
$$CRC(IV, D' \oplus S_1 \oplus S_2) = CRC(IV, D \oplus S_1 \oplus S_2 \oplus S_1 \oplus S_2) = CRC(IV, D).$$

Les étapes de vérification d'intégrité E40 à E44 sont similaires aux étapes E20 à E24 décrites précédemment.

**Revendications**

1. Procédé de détermination d'une première somme d'intégrité (T) comprenant les étapes suivantes :

   - détermination d'une première donnée masquée (C') par application d'une opération de « ou exclusif » entre une première donnée (C) et un premier masque de données (R) ;
   - détermination d'une deuxième donnée (D') par application à la première donnée masquée (C') d'une première fonction cryptographique (G), la deuxième donnée (D') étant masquée par un second masque de données (R ; S) ;
   - détermination d'une deuxième somme d'intégrité ($T_0$) associée à la deuxième donnée (D') par application à ladite deuxième donnée (D') d'une fonction de somme de contrôle (Cks) ; et
   - détermination de la première somme d'intégrité (T) par application d'une opération de « ou exclusif » entre la deuxième somme d'intégrité ($T_0$) et une troisième somme d'intégrité ($T_1$) associée au second masque de données (R ; S).

2. Procédé de détermination d'une première somme d'intégrité (T) selon la revendication 1, dans lequel la première fonction cryptographique (G) combine par une opération de « ou exclusif » la première donnée masquée (C') et un résultat obtenu en sortie d'un bloc de chiffrement.

3. Procédé de détermination d'une première somme d'intégrité (T) selon la revendication 2, dans lequel le bloc de chiffrement utilise une clé cryptographique (K).

4. Procédé de détermination d'une première somme d'intégrité (T) selon l'une quelconque des revendications 1 à 3, dans lequel la première fonction cryptographique (G) est de type déchiffrement à rétroaction (CFB) ou déchiffrement à rétroaction de sortie (OFB) ou déchiffrement basé sur un compteur (CTR).

5. Procédé de détermination d'une première somme d'intégrité (T) selon l'une quelconque des revendications 1 à 4, dans lequel le premier masque de données (R) est généré de manière aléatoire.

6. Procédé de détermination d'une première somme d'intégrité (T) selon l'une quelconque des revendications 1 à 5, comprenant en outre l'étape suivante :

   - détermination de la troisième somme d'intégrité ($T_1$) associée au second masque de données (R ; S) par application de la fonction somme de contrôle (Cks) au second masque de données (R ; S).

7. Procédé de détermination d'une première somme d'intégrité (T) selon l'une quelconque des revendications 1 à 6, dans lequel la première fonction cryptographique (G) est une fonction à conservation de masque de données et dans lequel le premier masque de données (R) et le second masque de données (R) sont égaux.

8. Procédé de détermination d'une première somme d'intégrité (T) selon l'une quelconque des revendications 1 à 7, dans lequel la détermination d'au moins une somme d'intégrité parmi la deuxième somme d'intégrité ($T_0$) et la troisième somme d'intégrité ($T_1$) est réalisée par application de la fonction somme de contrôle (Cks) avec un vecteur d'initialisation mis à 0.

9. Procédé de détermination d'une première somme d'intégrité (T) selon l'une quelconque des revendications 1 à 8, dans lequel la fonction de somme de contrôle (Cks) est une application affine de données.

10. Procédé de détermination d'une première somme d'intégrité (T) selon l'une quelconque des revendications 1 à 9, dans lequel la fonction de somme de contrôle (Cks) est de type calcul de parité ou contrôle de redondance cyclique (CRC).

11. Procédé de détermination d'une première somme d'intégrité (T) selon l'une quelconque des revendications 1 à 10, comprenant en outre les étapes suivantes :

- réception de la première donnée (C) et d'une quatrième somme d'intégrité ($T_D$) associée à une troisième donnée (D) ; et
- vérification d'intégrité de la troisième donnée (D) par comparaison de la première somme d'intégrité (T) et de la quatrième somme d'intégrité ($T_D$).

12. Procédé de détermination d'une première somme d'intégrité (T) selon la revendication 11, dans lequel la première donnée (C) est obtenue par application d'une deuxième fonction cryptographique (F) à la troisième donnée (D), la deuxième fonction cryptographique (F) permettant d'effectuer une opération inverse d'au moins une opération de la première fonction cryptographique (G).

13. Programme d'ordinateur comprenant des instructions exécutables par un processeur (2) et adaptées à mettre en œuvre un procédé selon l'une quelconque des revendications 1 à 12 lorsque ces instructions sont exécutées par le processeur (2).

14. Entité électronique de détermination d'une première somme d'intégrité (T) comprenant :

- un module de détermination d'une première donnée masquée (C') par application d'une opération de « ou exclusif » entre une première donnée (C) et un premier masque de données (R) ;
- un module de détermination d'une deuxième donnée (D') par application à la première donnée masquée (C') d'une première fonction cryptographique (G), la deuxième donnée (D') étant masquée par un second masque de données (R ; S) ;
- un module de détermination d'une deuxième somme d'intégrité ($T_0$) associée à la deuxième donnée (D') par application à ladite deuxième donnée (D') d'une fonction de somme de contrôle (Cks) ;
- un module de détermination de la première somme d'intégrité (T) par application d'une opération de « ou exclusif » entre la deuxième somme d'intégrité ($T_0$) et une troisième somme d'intégrité ($T_1$) associée au second masque de données (R ; S).

15. Entité électronique de détermination d'une première somme d'intégrité (T) selon la revendication 14, comprenant en outre :

- une mémoire stockant la première donnée (C) et une quatrième somme d'intégrité ($T_D$) associée à une troisième donnée (D) ; et
- un module de vérification d'intégrité de la troisième donnée (D) par comparaison de la première somme d'intégrité (T) et de la quatrième somme d'intégrité ($T_D$).

**Patentansprüche**

1. Verfahren zur Ermittlung einer ersten Prüfsumme (T) mit den folgenden Schritten:

- Ermitteln eines ersten maskierten Datums (C') durch Anwenden einer "Ausschließlich ODER"-Operation zwischen einem ersten Datum (C) und einer ersten Datumsmaske (R),
- Ermitteln eines zweiten Datums (D') durch Anwenden einer ersten kryptografischen Funktion (G) auf das erste maskierte Datum (C'), wobei das zweite Datum (D') durch eine zweite Datumsmaske (R; S) maskiert ist,
- Ermitteln einer dem zweiten Datum (D') zugeordneten zweiten Prüfsumme ($T_0$) durch Anwenden einer Kontrollsummenfunktion (Cks) auf das zweite Datum (D') und

- Ermitteln der ersten Prüfsumme (T) durch Anwenden einer "Ausschließlich ODER"-Operation zwischen der zweiten Prüfsumme ($T_0$) und einer der zweiten Datumsmaske (R; S) zugeordneten dritten Prüfsumme ($T_1$).

2. Verfahren zur Ermittlung einer ersten Prüfsumme (T) gemäß Anspruch 1, bei dem die erste kryptografische Funktion (G) das erste maskierte Datum (C') und ein am Ausgang eines Chiffrierblocks erhaltenes Resultat durch eine "Ausschließlich ODER"-Operation kombiniert.

3. Verfahren zur Ermittlung einer ersten Prüfsumme (T) gemäß Anspruch 2, bei dem der Chiffrierblock einen kryptografischen Schlüssel (K) verwendet.

4. Verfahren zur Ermittlung einer ersten Prüfsumme (T) gemäß einem der Ansprüche 1 bis 3, bei dem die erste kryptografische Funktion (G) vom Typ einer Rückführungsentschlüsselung (CFB) oder einer Ausgangsrückführungsentschlüsselung (OFB) oder einer auf einem Zähler basierenden Entschlüsselung (CTR) ist.

5. Verfahren zur Ermittlung einer ersten Prüfsumme (T) gemäß einem der Ansprüche 1 bis 4, bei dem die erste Datumsmaske (R) zufallsmäßig erzeugt wird.

6. Verfahren zur Ermittlung einer ersten Prüfsumme (T) gemäß einem der Ansprüche 1 bis 5, das außerdem den folgenden Schritt aufweist:

    - Ermitteln der der zweiten Datumsmaske (R; S) zugeordneten dritten Prüfsumme ($T_1$) durch Anwenden der Kontrollsummenfunktion (Cks) auf die zweite Datumsmaske (R; S).

7. Verfahren zur Ermittlung einer ersten Prüfsumme (T) gemäß einem der Ansprüche 1 bis 6, bei dem die erste kryptografische Funktion (G) eine Funktion mit Datumsmaskenbewahrung ist und bei dem die erste Datumsmaske (R) und die zweite Datumsmaske (R) gleich sind.

8. Verfahren zur Ermittlung einer ersten Prüfsumme (T) gemäß einem der Ansprüche 1 bis 7, bei dem das Ermitteln wenigstens einer Prüfsumme unter der zweiten Prüfsumme ($T_0$) und der dritten Prüfsumme ($T_1$) durch Anwenden der Kontrollsummenfunktion (Cks) mit einem auf Null gesetzten Startvektor durchgeführt wird.

9. Verfahren zur Ermittlung einer ersten Prüfsumme (T) gemäß einem der Ansprüche 1 bis 8, bei dem die Kontrollsummenfunktion (Cks) eine affine Abbildung von Daten ist.

10. Verfahren zur Ermittlung einer ersten Prüfsumme (T) gemäß einem der Ansprüche 1 bis 9, bei dem die Kontrollsummenfunktion (Cks) vom Typ der Paritätsberechnung oder der zyklischen Redundanzkontrolle (CRC) ist.

11. Verfahren zur Ermittlung einer ersten Prüfsumme (T) gemäß einem der Ansprüche 1 bis 10, das außerdem die folgenden Schritte aufweist:

    - Empfangen des ersten Datums (C) und einer einem dritten Datum (D) zugeordneten vierten Prüfsumme ($T_D$) und
    - Überprüfen der Konsistenz des dritten Datums (D) durch Vergleich der ersten Prüfsumme (T) mit der vierten Prüfsumme ($T_D$).

12. Verfahren zur Ermittlung einer ersten Prüfsumme (T) gemäß Anspruch 11, bei dem das erste Datum (C) durch Anwenden einer zweiten kryptografischen Funktion (F) auf das dritte Datum (D) erhalten wird, wobei die zweite kryptografische Funktion (F) ermöglicht, eine inverse Operation wenigstens einer Operation der ersten kryptografischen Funktion (G) auszuführen.

13. Computerprogramm mit Befehlen, die von einem Prozessor (2) ausgeführt werden können und die geeignet sind, ein Verfahren gemäß einem der Ansprüche 1 bis 12 auszuführen, wenn die Befehle vom Prozessor (2) ausgeführt werden.

14. Elektronische Einheit zur Ermittlung einer ersten Prüfsumme (T) mit

    - einem Modul zum Ermitteln eines ersten maskierten Datums (C') durch Anwenden einer "Ausschließlich ODER"-Operation zwischen einem ersten Datum (C) und einer ersten Datumsmaske (R),

- einem Modul zum Ermitteln eines zweiten Datums (D') durch Anwenden einer kryptografischen Funktion (G) auf das erste maskierte Datum (C'), wobei das zweite Datum (D') durch eine zweite Datumsmaske (R; S) maskiert ist,
- einem Modul zum Ermitteln einer dem zweiten Datum (D') zugeordneten zweiten Prüfsumme $(T_0)$ durch Anwenden einer Kontrollsummenfunktion (Cks) auf das zweite Datum (D'),
- einem Modul zum Ermitteln der ersten Prüfsumme (T) durch Anwenden einer "Ausschließlich ODER"-Operation zwischen der zweiten Prüfsumme $(T_0)$ und einer der zweiten Datumsmaske (R; S) zugeordneten dritten Prüfsumme $(T_1)$.

15. Elektronische Einheit zum Ermitteln einer ersten Prüfsumme (T) gemäß Anspruch 14, die außerdem

- einen Speicher, der das erste Datum (C) und eine einem dritten Datum (D) zugeordnete vierte Prüfsumme $(T_D)$ speichert, und
- ein Modul zur Überprüfung der Konsistenz des dritten Datums (D) durch Vergleich der ersten Prüfsumme (T) mit der vierten Prüfsumme $(T_D)$

aufweist.

## Claims

1. Method for determining a first integrity sum (T) comprising the following steps:

    - determining a first masked item of data (C') by application of an "exclusive OR" operation between a first item of data (C) and a first data mask (R);
    - determining a second item of data (D') by application to the first masked item of data (C') of a first cryptographic function (G), the second item of data (D') being masked by a second data mask (R; S);
    - determining a second integrity sum $(T_0)$ associated with the second item of data (D') by application to said second item of data (D') of a checksum function (Cks); and
    - determining the first integrity sum (T) by application of an "exclusive OR" operation between the second integrity sum $(T_0)$ and a third integrity sum $(T_1)$ associated with the second data mask (R; S).

2. Method for determining a first integrity sum (T) according to claim 1, wherein the first cryptographic function (G) combines, by an "exclusive OR" operation, the first masked item of data (C') and a result obtained at the output of an encryption block.

3. Method for determining a first integrity sum (T) according to claim 2, wherein the encryption block uses a cryptographic key (K).

4. Method for determining a first integrity sum (T) according to any of claims 1 to 3, wherein the first cryptographic function (G) is of the Cipher Feedback (CFB) or Output Feedback (OFB) or CounTerR type (CTR).

5. Method for determining a first integrity sum (T) according to any of claims 1 to 4, wherein the first data mask (R) is generated randomly.

6. Method for determining a first integrity sum (T) according to any of claims 1 to 4, further comprising the following step:

    - determining the third integrity sum $(T_1)$ associated with the second data mask (R; S) by application of the checksum function (Cks) to the second data mask (R; S).

7. Method for determining a first integrity sum (T) according to any of claims 1 to 6, wherein the first cryptographic function (G) is a function that maintains data masks and wherein the first data mask (R) and the second data mask (R) are equal.

8. Method for determining a first integrity sum (T) according to any of claims 1 to 7, wherein determining at least one integrity sum from among the second integrity sum $(T_0)$ and the third integrity sum $(T_1)$ is done by application of the checksum function (Cks) with an initialization vector set to 0.

9. Method for determining a first integrity sum (T) according to any of claims 1 to 8, wherein the checksum function (Cks) is an affine transformation of data.

10. Method for determining a first integrity sum (T) according to any of claims 1 to 9, wherein the checksum function (Cks) is of the parity byte or Cyclic Redundancy Check (CRC) type.

11. Method for determining a first integrity sum (T) according to any of claims 1 to 10, further comprising the following steps:

- receiving the first item of data (C) and a fourth integrity sum ($T_D$) associated with a third item of data (D); and
- verifying integrity of the third item of data (D) by comparing the first integrity sum (T) and the fourth integrity sum ($T_D$).

12. Method for determining a first integrity sum (T) according to claim 11, wherein the first item of data (C) is obtained by application of a second cryptographic function (F) to the third item of data (D), the second cryptographic function (F) making it possible to carry out an inverse operation of at least one operation of the first cryptographic function (G).

13. Computer program comprising instructions that can be executed by a processor (2) and suitable for implementing a method according to any of claims 1 to 12 when these instructions are executed by the processor (2).

14. Electronic entity for determining a first integrity sum (T) comprising:

- a module for determining a first masked item of data (C') by application of an "exclusive OR" operation between a first item of data (C) and a first data mask (R);
- a module for determining a second item of data (D') by application to the first masked item of data (C') of a first cryptographic function (G), the second item of data (D') being masked by a second data mask (R; S);
- a module for determining a second integrity sum ($T_D$) associated with the second item of data (D') by application to said second item of data (D') of a checksum function (Cks);
- a module for determining the first integrity sum (T) by application of an "exclusive OR" operation between the second integrity sum ($T_0$) and a third integrity sum ($T_1$) associated with the second data mask (R; S).

15. Electronic entity for determining a first integrity sum (T) according to claim 14, further comprising:

- a memory storing the first item of data (C) and a fourth integrity sum ($T_D$) associated with a third item of data (D); and
- a module for verifying integrity of the third item of data (D) by comparing the first integrity sum (T) and the fourth integrity sum ($T_D$).

**Fig.1**

**Fig.2**

**Fig.3**

$$\text{Rec } C, T_D \qquad E4$$

$$\downarrow$$

$$\text{Det } R \qquad E6$$

$$\downarrow$$

$$C' \leftarrow C \oplus R \qquad E8$$

$$\downarrow$$

$$(D', S) \leftarrow G(C', R) \qquad E30$$

$$\downarrow$$

$$T_0 \leftarrow Cks(D') \qquad E32$$

$$\downarrow$$

$$T_1 \leftarrow Cks(S) \qquad E34$$

$$\downarrow$$

$$T \leftarrow T_0 \oplus T_1 \qquad E36$$

$$\downarrow$$

$$E40 \qquad T = T_D? \qquad \rightarrow \qquad ERR \qquad E42$$

$$\downarrow$$

$$\text{INT } D \qquad E44$$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015082435 A1

- EP 2296307 A

**Littérature non-brevet citée dans la description**

- **C. CLAVIER et al.** Passive and Active Combined Attacks on AES Combining Fault Attacks and Side Channel Analysis. *Workshop on Fault Diagnosis and Tolerance in Cryptography (FDTC),* 2010